# EUROPÄISCHE PATENTANMELDUNG

(11) **EP 3 766 765 A1**
(43) Veröffentlichungstag der Anmeldung: **20.01.2021**
(21) Anmeldenummer: 20162288.3
(22) Anmeldetag: 11.03.2020
(51) Int. Cl.: B62D 33/06

(54) **KABINE FÜR EINE LANDWIRTSCHAFTLICHE ARBEITSMASCHINE**

(30) Priorität: 16.07.2019 DE 102019119179
(71) Anmelder: CLAAS Tractor S.A.S., 78141 Vélizy-Villacoublay Cedex (FR)
(72) Erfinder: Barentin, Magali, 78450 Villepreux (FR); Heilles, Yves, 94429 Le Plessis Trévise (FR)
(74) Vertreter: CLAAS Gruppe

(57) **Zusammenfassung**

Die vorliegende Erfindung betrifft eine Kabine (30) für eine landwirtschaftliche Arbeitsmaschine, umfassend einen unteren Rahmenteil (2), welcher durch eine ein Dämpfungssystem (3) umfassende Kabinenlagerung (1) sowie ein Überrollschutzsystem (4) mit einem Chassis (5) der Arbeitsmaschine verbunden ist, wobei das Überrollschutzsystem (4) eine kabinenseitig angeordnete Verbindungsvorrichtung (6, 22, 34) aufweist, wobei die Verbindungsvorrichtung (6, 22, 33) in einem ersten Betriebszustand, in welchem die Kabine (30) betriebsbedingten Belastungen ausgesetzt ist, die durch das Dämpfungssystem (3) kompensierbar sind, spielbehaftet und insbesondere formschlüssig in eine chassisseitige Haltevorrichtung (7, 21, 33) eingreift, und wobei das Überrollschutzsystem (4) parallel und separat zu dem Dämpfungssystem (3) angeordnet ist, und in einem zweiten Betriebszustand, in welchem es zu einer Aktivierung des Überrollschutzsystems (4) kommt, die auftretenden Belastungen unmittelbar über die Verbindungsvorrichtung (6, 22, 34) abgeleitet werden.

## Beschreibung

Die vorliegende Erfindung betrifft eine Kabine für eine landwirtschaftliche Arbeitsmaschine gemäß dem Oberbegriff des Anspruches 1. Weiterhin hat die vorliegende Erfindung eine landwirtschaftliche Arbeitsmaschine gemäß dem Oberbegriff des Anspruches 11 zum Gegenstand.

Eine Kabine für eine für eine landwirtschaftliche Arbeitsmaschine sowie eine landwirtschaftliche Arbeitsmaschine sind aus der US 2016/0096553 A1 bekannt. Die Kabine weist einen unteren Rahmenteil auf, an welchem Montagestrukturen angeordnet sind, um die Kabine mit einem Chassis der Arbeitsmaschine zu verbinden. Zwischen der Oberseite der jeweiligen Montagestruktur und dem unteren Rahmenteil ist eine Kabinenlagerung mit einem Dämpfungssystem angeordnet, die in die Montagestruktur integriert ist. Ein Überrollschutzsystem (Roll Over Protection System - ROPS), welches ein Abreißen der Kabine verhindern soll, ist ebenfalls an der Oberseite der jeweiligen Montagestruktur angeordnet. Das Überrollschutzsystem weist eine kabinenseitig befestigte Zusatzstütze auf, welche spielbehaftet, formschlüssig in eine Ausnehmung an der Oberseite der Montagestruktur eingreift und bei einer zu großen Auslenkung der Kabine durch Formschluss mit der Montagestruktur deren Abreißen verhindert. Die Zusatzstütze ist in Form eines DoppelT-Träger ausgeführt und an der Montagestruktur angeschweißt. Nachteilig ist hierbei, dass die Montagestruktur je nach gewähltem Dämpfungsmittel des Dämpfungssystems unterschiedlich hoch oder breit ausgebildet ist und eine Festigkeit aufweisen muss, die den Anforderungen des Überrollschutzsystems genügt. Zudem muss bei jeder Änderung des Dämpfungsmittels und der Montagestruktur zur Homologation ein neuer Überrolltest durchgeführt werden, was nicht nur zeitaufwändig ist, sondern auch zusätzliche Kosten verursacht. Zudem fällt die Dimensionierung der Montagestruktur zur Aufnahme von hohen Kräften bei einem Überrollen stabiler aus als für die reine Aufnahme von Dämpfungsmittel notwendig wäre. Durch die erforderliche Überdimensionierung der Montagestruktur weist diese ein höheres Gewicht aus als notwendig.

Aufgabe der vorliegenden Erfindung ist es, eine Kabine für eine landwirtschaftliche Arbeitsmaschine sowie eine landwirtschaftliche Arbeitsmaschine weiterzubilden, die sich durch eine vereinfachte Konstruktion der Kabinenlagerung unter Gewährleistung der Funktionssicherheit auszeichnen.

Diese Aufgabe wird durch eine Kabine für eine landwirtschaftliche Arbeitsmaschine mit den Merkmalen des Anspruches 1 gelöst. Vorteilhafte Weiterbildungen sind Gegenstand der von Anspruch 1 abhängigen Unteransprüche.

Weiterhin wird die Aufgabe durch eine landwirtschaftliche Arbeitsmaschine mit den Merkmalen des Anspruches 11 gelöst.

Gemäß dem Anspruch 1 wird eine Kabine für eine landwirtschaftliche Arbeitsmaschine vorgeschlagen, umfassend einen unteren Rahmenteil, welcher durch eine ein Dämpfungssystem umfassende Kabinenlagerung sowie ein Überrollschutzsystem mit einem Chassis der Arbeitsmaschine verbunden ist, wobei das Überrollschutzsystem eine kabinenseitig angeordnete Verbindungsvorrichtung aufweist. Unter dem Begriff Chassis ist die Komponente der Arbeitsmaschine zu verstehen, welche Antrieb, Karosserie und Nutzlast der Arbeitsmaschine trägt. Erfindungsgemäß ist vorgesehen, dass die Verbindungsvorrichtung in einem ersten Betriebszustand, in welchem die Kabine betriebsbedingten Belastungen ausgesetzt ist, die durch das Dämpfungssystem kompensiert werden, spielbehaftet und insbesondere formschlüssig in eine chassisseitige Haltevorrichtung eingreift, und wobei das Überrollschutzsystem parallel und separat zu dem Dämpfungssystem angeordnet ist, und in einem zweiten Betriebszustand, in welchem es zu einer Aktivierung des Überrollschutzsystems kommt, die auftretenden Belastungen unmittelbar über die Verbindungsvorrichtung abgeleitet werden. Durch diese Ausgestaltung der Kabinenlagerung werden beispielsweise bei einem Überschlag die gesamten auf die Kabine einwirkenden Kräfte über das separat angeordnete Überrollschutzsystem abgefangen, ohne dass das Dämpfungssystem überlastet wird. Dies hat den Vorteil, dass das Dämpfungssystem unabhängig von dem Überrollschutzsystem ausgelegt und installiert werden kann. Besonders vorteilhaft ist hierbei, dass eine Veränderung an der Auslegung des Dämpfungssystems keine neue Homologation des Überrollschutzsystems erfordert, wodurch Zeit und Kosten gespart werden können. Unter dem Merkmal, dass die Verbindungsvorrichtung spielbehaftet in eine chassisseitige Haltevorrichtung eingreift, ist dabei zu verstehen, dass in dem ersten Betriebszustand eine Bewegung bzw. Auslenkung der Kabine ohne Widerstandskräfte des Überrollsystems möglich ist. Erst beim Auftreten des zweiten Betriebszustands wird durch das Überrollsystem ein Rückhaltezustand erzeugt. In dem zweiten Betriebszustand wird eine definierte maximal zulässige Auslenkung der Kabine überschritten, so dass eine Begrenzung der Bewegung durch eine spielfreie Ausrichtung der Verbindungs- und Haltevorrichtung zueinander erfolgt. Unter dem Merkmal der separaten Anordnung des Überrollschutzsystem zu dem Dämpfungssystem ist zu verstehen, dass das Überrollschutzsystem in seiner Funktion von dem Dämpfungssystem unbeeinflusst und unabhängig zwischen der Kabine und dem Chassis angeordnet ist. Dem Überrollschutzsystem kommt keine zusätzliche Funktion zu, die der Führung im ersten Betriebszustand der Kabine dient.

Bevorzugt kann die die Haltevorrichtung einteilig mit dem Chassis der Arbeitsmaschine ausgebildet sein. Dies wird durch die Unabhängigkeit der Auslegung von Dämpfungssystem der Kabinenlagerung und Überrollschutzsystem ermöglicht.

Insbesondere kann die Haltevorrichtung in Form eines flachen Anbauteils an dem Chassis ausgebildet sein. So kann die Haltevorrichtung als eine Adapterplatte ausgeführt sein, die zwischen dem Chassis und einem unteren Verbindungselement der Kabinenlagerung angeordnet ist. Die Adapterplatte kann mit zusätzlichen Dämpfungselementen ausgeführt sein, beispielsweise aus einem gummielastischen Material bestehenden Absorbern.

Weiterhin kann die Haltevorrichtung in Form eines Montagemoduls an dem Chassis ausgebildet sein. Dabei kann das Montagemodul auch zur Befestigung an dem Chassis eingerichtet sein.

Gemäß einer bevorzugten Ausführungsform kann die Verbindungsvorrichtung als ein flexibles Element ausgeführt sein. Eine als flexibles Element ausgeführte Verbindungsvorrichtung weist mehr Freiheitsgrade hinsichtlich möglicher Auslenkungen auf, was bei einem Auftreten der zweiten Betriebssituation vorteilhaft sein kann.

Hierbei kann die Verbindungsvorrichtung als ein Seil, Band, Gurt oder Riemen aus einem metallischen Werkstoff ausgeführt sein.

Alternativ kann die Verbindungsvorrichtung als ein starres Element ausgeführt sein. Eine als starres Element ausgeführte Verbindungsvorrichtung hat den Vorteil, dass diese nicht auf das Überragen von Zugkräften beschränkt ist.

Dazu kann die Verbindungsvorrichtung als eine Strebe ausgeführt sein, die mit einem Endabschnitt mit der Haltevorrichtung in Eingriff steht und mit ihrem anderen Endabschnitt an der Kabine lösbar befestigt ist. Insbesondere kann der Endabschnitt an dem unteren Rahmenteil befestigt sein. Die Ausführung der Verbindungsvorrichtung als eine Strebe hat den Vorteil, dass diese sowohl Zug- als auch Druckkräfte aufnehmen bzw. übertragen kann.

Insbesondere kann die Haltevorrichtung eine sich in vertikaler Richtung erstreckende Öffnung aufweisen, in welche der mit der Haltevorrichtung in Eingriff stehende Endabschnitt der Strebe abschnittsweise hineinragt.

Alternativ kann die Haltevorrichtung mit einem bügelförmigen Abschnitt ausgeführt sein, der sich im Wesentlichen parallel zu der Strebe erstreckt und in den der Endabschnitt der Strebe abschnittsweise hineinragt. Der bügelförmige Abschnitt kann Teil einer Adapterplatte sein, mit der die Haltevorrichtung mit dem Chassis verbunden ist. Der bügelförmige Abschnitt weist zwei im Wesentlichen zueinander parallel verlaufende Schenkel auf, die durch einen querverlaufenden Schenkel miteinander verbunden sind. Dieser bogenförmige Abschnitt bildet einen Anschlag für die als Strebe ausgeführte Verbindungsvorrichtung. In dem bügelförmigen Abschnitt wird der hineinragende Endabschnitt der Strebe in dem ersten Betriebszustand formschlüssig und spielfrei gehalten. In dem zweiten Betriebszustand, der zur Aktivierung des Überrollschutzsystems führt, erfolgt eine Begrenzung der Bewegung durch eine spielfreie Ausrichtung der Verbindungs- und Haltevorrichtung zueinander. Hierbei kann der Endabschnitt der Strebe spielfrei an dem bogenförmigen Abschnitt anliegen.

Weiterhin wird die eingangs gestellte Aufgabe durch eine landwirtschaftliche Arbeitsmaschine mit einer Kabine, umfassend einen unteren Rahmenteil, welcher durch eine ein Dämpfungssystem umfassende Kabinenlagerung sowie ein Überrollschutzsystem mit einem Chassis der Arbeitsmaschine verbunden ist, gelöst, die dadurch gekennzeichnet ist, dass die Kabine nach einem der Ansprüche 1 bis 10 ausgeführt ist.

Die vorliegende Erfindung wird nachstehend anhand von in den Zeichnungen dargestellten Ausführungsbeispielen näher erläutert.

Es zeigen:
- Fig. 1: eine perspektivische Ansicht einer Lagerstelle einer Kabinenlagerung für eine Kabine einer Arbeitsmaschine;
- Fig. 2: eine perspektivische Ansicht einer Lagerstelle der Kabinenlagerung für eine Kabine gemäß einer zweiten Ausführungsform; und
- Fig. 3: eine perspektivische Ansicht einer Lagerstelle der Kabinenlagerung für eine Kabine gemäß einer dritten Ausführungsform.

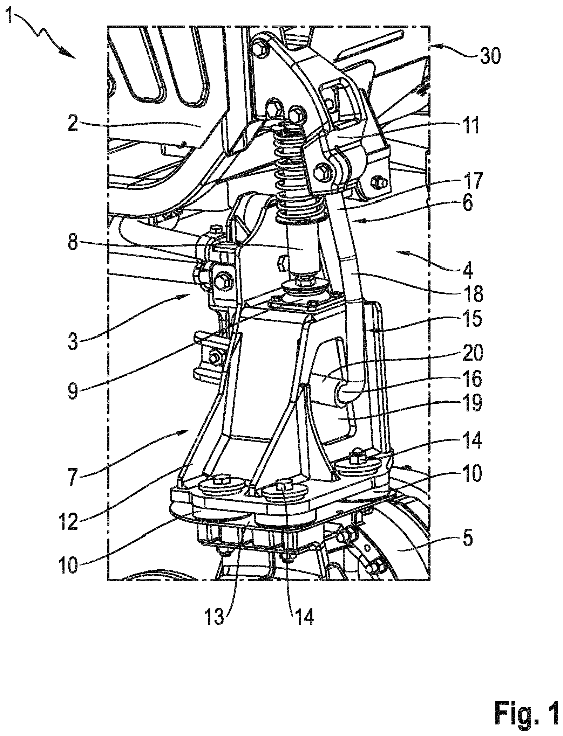

In Fig. 1 ist eine perspektivische Ansicht einer Lagerstelle einer Kabinenlagerung 1 für eine Kabine 30 einer landwirtschaftlichen oder kommunalen Arbeitsmaschine dargestellt. Die Arbeitsmaschine ist insbesondere als ein Traktor ausgeführt. Die Kabine 30 umfasst einen unteren Rahmenteil 2. Die Kabine 30 weist mindestens zwei Lagerstellen auf, welche insbesondere heckseitig an der Kabine 30 der Arbeitsmaschine angeordnet sind. Der untere Rahmenteil 2 ist an seinen jeweiligen Lagerstellen durch ein Dämpfungssystem 3 und ein Überrollschutzsystem 4 mit einem Chassis 5 der Arbeitsmaschine verbunden.

Das Dämpfungssystem 3 umfasst ein oder mehrere Dämpfungsmittel zur Dämpfung von im Wesentlichen vertikalen Bewegungen. Ein Dämpfungsmittel ist dabei in Form eines Feder-Dämpfer-Elementes 8 ausgebildet, weitere Dämpfungsmittelsind Dämpfungselemente 9, 10, die als Absorber aus einem gummielastischen Material ausgeführt sind.

Jede Lagerstelle der Kabinenlagerung 1 weist eine Haltevorrichtung 7 auf, welche ein unteres Verbindungselement 12 umfasst. Die Haltevorrichtung 7 kann einteilig mit dem Chassis 5 ausgebildet sein. Das untere Verbindungselement 12 der Haltevorrichtung 7 bildet einen sich im Wesentlichen in vertikaler Richtung erstreckenden Sockel, an dessen Oberseite das Feder-Dämpfer-Element 8 mit seinem einen Endabschnitt angeordnet ist. Das untere Verbindungselement 12 ist gegenüber dem Chassis 5 der Arbeitsmaschine abgestützt. Zur Abstützung des unteren Verbindungselementes 12 gegenüber dem Chassis 5 ist eine Adapterplatte 13 vorgesehen. Die Adapterplatte 13 ist an dem Chassis 5 befestigt und durch Befestigungsmittel 14 mit dem unteren Verbindungselement 12 lösbar verbunden. Die als Absorber ausgeführten Dämpfungselemente 10 sind zwischen der Adapterplatte 13 und dem unteren Verbindungselement 12 angeordnet. Die dargestellte Ausführungsform der Haltevorrichtung 7 ist in Form eines Montagemoduls ausgeführt.

Ein oberes Verbindungselement 11 ist im dargestellten Ausführungsbeispiel mit dem unteren Rahmenteil 2 der Kabine 30 verbunden. Das obere Verbindungselement 11 und das untere Verbindungselement 12 sind durch das Dämpfungssystem 3 relativ zueinander beweglich verbunden. Hierzu ist das sich im Wesentlichen in vertikaler Richtung erstreckende Feder-Dämpfer-Element 8 mit einem Endabschnitt an dem oberen Verbindungselement 11 angeordnet und mit einem gegenüberliegenden Endabschnitt an dem unteren Verbindungselement 12 angeordnet.

Das Überrollschutzsystem 4 weist eine kabinenseitig angeordnete Verbindungsvorrichtung 6 auf. Die Verbindungsvorrichtung 6 ist als eine Strebe 15 ausgeführt, die mit einem Endabschnitt 16 mit der Haltevorrichtung 7 in Eingriff steht und mit ihrem gegenüberliegenden Endabschnitt 17 an einem Abschnitt an dem unteren Rahmenteil 2 befestigt ist. Die Verbindungsvorrichtung 6 ist in dem dargestellten Ausführungsbeispiel an dem oberen Verbindungselement 11 lösbar angeordnet. Die Strebe 15 ist im Wesentlichen L-förmig ausgeführt. Ein sich vertikal erstreckendes Segment 18 der Strebe 15 ist gegenüber dem Endabschnitt 16 unter einem Winkel geneigt angeordnet. Der Endabschnitt 16 ragt abschnittsweise in eine Öffnung 19 oder Ausnehmung des unteren Verbindungselementes 12 hinein, d.h. in Richtung der Kabine 30 orientiert. Das untere Verbindungselement 12 kann hierzu einen Hohlraum aufweisen, der durch die Öffnung 19 zugänglich ist. Das untere Verbindungselement 12 kann auch im Wesentlichen aus einem Vollmaterial bestehen, in welches eine Ausnehmung eingearbeitet ist. Der Endabschnitt 16 kann eine dämpfende Ummantelung 20 aufweisen, welche aus einem gummielastischen Kunststoff besteht.

Die Verbindungsvorrichtung 6 greift in einem ersten Betriebszustand der Arbeitsmaschine, in welchem die Kabine 30 betriebsbedingten Belastungen ausgesetzt ist, die durch das Dämpfungssystem 3 kompensiert werden können, spielbehaftet und insbesondere formschlüssig in die chassisseitige Haltevorrichtung 7 ein. In dem in Fig. 1 dargestellten Ausführungsbeispiel greift der Endabschnitt 16 der Strebe 15 in die Öffnung 19 oder Ausnehmung des unteren Verbindungselementes 12 des Dämpfungssystems 3 ein. Dabei ist das Überrollschutzsystem 4 parallel und separat zu dem Dämpfungssystem 3 angeordnet.

In einem zweiten Betriebszustand der Arbeitsmaschine, in welchem es zu einer Aktivierung des Überrollschutzsystem 4 kommt, werden die auftretenden Belastungen an der Lagerstelle unmittelbar über die Verbindungsvorrichtung 6 abgeleitet. Die in der zweiten Betriebssituation auftretende Auslenkung der Kabine 30 in vertikaler Richtung bewirkt, dass die Strebe 15 der Verbindungsvorrichtung 6 respektive der Endabschnitt 16 formschlüssig und spielfrei mit der Öffnung 19 oder Ausnehmung des unteren Verbindungselementes 12 in Eingriff steht. Dadurch wird eine Überlastung des Dämpfungssystems 3 verhindert.

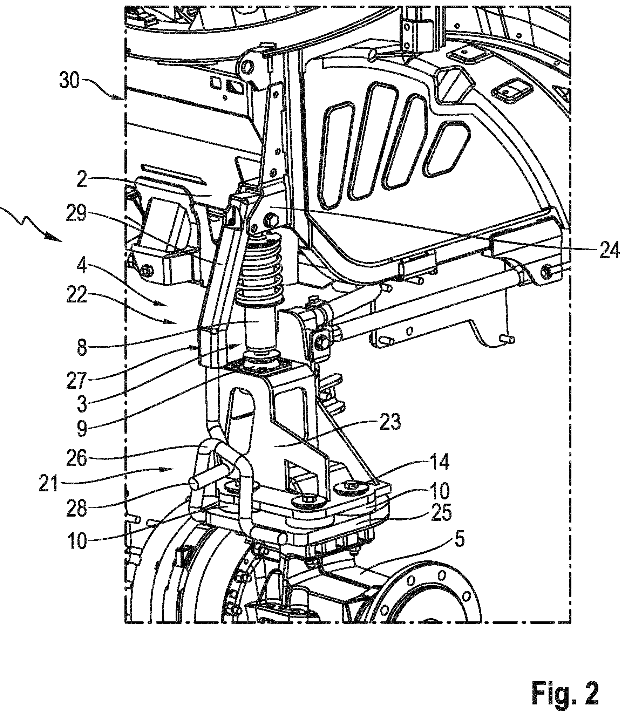

Die Darstellung in Fig. 2 zeigt eine perspektivische Ansicht einer Lagerstelle der Kabinenlagerung 1 für eine Kabine 30 gemäß einer zweiten Ausführungsform. Für identische oder funktionsgleiche Komponenten der Kabinenlagerung 1 werden die gleichen Bezugszeichen verwendet. Die Ausgestaltung der jeweiligen Lagerstelle der Kabinenlagerung 1 gemäß der zweiten Ausführungsform unterschiedet sich durch eine abweichende Ausführung von Haltevorrichtung 21 sowie Verbindungsvorrichtung 22 des Überrollschutzsystems 4.

Die Haltevorrichtung 21 umfasst ein unteres sockelförmiges Verbindungselement 23, an welchem das Feder-Dämpfer-Element 8 mit einem Ende angeordnet ist. Das gegenüberliegende Ende des Feder-Dämpfer-Elements 8 ist mit einem oberen Verbindungselement 24 verbunden. Das obere Verbindungselement 24 ist an der Kabine 30 befestigt. Das untere Verbindungselement 23 ist durch eine Adapterplatte 25 mit dem Chassis 5 lösbar verbunden. An der Adapterplatte 25 ist ein bügelförmiger Abschnitt 26 angeordnet. Der bügelförmige Abschnitt 26 erstreckt sich im Wesentlichen senkrecht nach oben in Richtung des unteren Rahmenteils 2.

Die Verbindungsvorrichtung 22 ist als eine Strebe 27 ausgeführt, die mit einem abgewinkelten Endabschnitt 28 mit der Haltevorrichtung 7 in Eingriff steht und mit ihrem gegenüberliegenden Endabschnitt 29 durch das obere Verbindungselement 24 mit dem unteren Rahmenteil 2 verbunden ist. Der Endabschnitt 28 erstreckt sich durch den bügelförmigen Abschnitt 26 an der Adapterplatte 25. Der Endabschnitt 28 der als Strebe 27 ausgeführten Verbindungsvorrichtung 22 ist dabei dem unteren Verbindungselement 23 abgewandt ausgerichtet. Die Verbindungsvorrichtung 22 ist parallel und separat zu dem Dämpfungssystem 3 angeordnet. Innerhalb des bügelförmigen Abschnitts 26 ist der Endabschnitt 28 der Strebe 27 spielbehaftet und formschlüssig gehalten, sofern das Dämpfungssystem 3 die betriebsbedingten Belastungen der Kabine 30 kompensieren kann. Mit dem Auftreten einer Belastung, die zu einer definierten, maximal zulässigen Auslenkung der Kabine 30 führt, erfolgt eine Begrenzung der Bewegung durch eine spielfreie Ausrichtung der Verbindungsvorrichtung 22 und der Haltevorrichtung 21 zueinander.

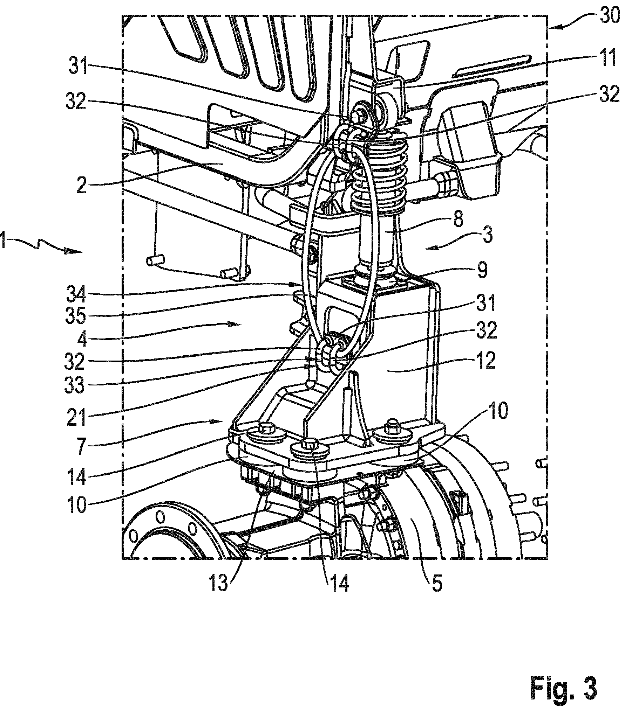

In Fig. 3 ist eine perspektivische Ansicht einer Lagerstelle der Kabinenlagerung 1 für die Kabine 30 gemäß einer dritten Ausführungsform dargestellt. Für identische oder funktionsgleiche Komponenten der Kabinenlagerung 1 werden die gleichen Bezugszeichen verwendet. An dem oberen Verbindungselement 11 ist ein Befestigungselement 31 lösbar angeordnet. Das Befestigungselement 31 weist zumindest eine Öse 32 auf. Ein weiteres Befestigungselement 31 mit zumindest einer Öse 32 ist an dem unteren Verbindungselement 12 lösbar angeordnet. Die beiden Befestigungselemente 31 mit den daran angeordneten Ösen 32 sind beabstandet übereinanderliegend angeordnet. Das Befestigungselemente 31 mit den Ösen 32 an dem unteren Verbindungselement 12 bildet eine Haltevorrichtung 33 der Kabinenlagerung 1. Die Befestigungselemente 31 mit den Ösen 32 nehmen eine als flexibles Element 35 ausgeführte Verbindungsvorrichtung 34 auf. Das flexible Element 34 kann als Seil, Band, Gurt oder Riemen aus einem metallischen Werkstoff ausgeführt sein. Im dargestellten Ausführungsbeispiel ist das flexible Element 35 als ein Drahtseil ausgeführt, dessen freie Enden miteinander verbunden sind, so dass es einen geschlossenen Ring bildet. Innerhalb der Ösen 32 ist die als flexibles Element 35 ausgeführte Verbindungsvorrichtung 34 spielbehaftet und formschlüssig angeordnet. Die spielbehaftete Anordnung ermöglicht es dem Dämpfungssystem 3 die in dem ersten Betriebszustand auftretenden betriebsbedingten Belastungen der Kabine 30 zu kompensieren.

Allen vorstehend beschriebenen Ausführungsformen ist gemeinsam, dass die Verbindungsvorrichtung 6, 22 oder 34 in einem ersten Betriebszustand, in welchem die Kabine 30 betriebsbedingten Belastungen ausgesetzt ist, die durch das Dämpfungssystem 3 kompensierbar sind, spielbehaftet und insbesondere formschlüssig in eine chassisseitige Haltevorrichtung 7, 21, 33 eingreift, und dass das Überrollschutzsystem 4 parallel und separat zu dem Dämpfungssystem 3 angeordnet ist, und in einem zweiten Betriebszustand, in welchem es zu einer Aktivierung des Überrollschutzsystem 4 kommt, die auftretenden Belastungen unmittelbar über die Verbindungsvorrichtung 6, 22, 34 abgeleitet werden. Das Dämpfungssystem 3 kann unabhängig von dem Überrollschutzsystem 4 ausgelegt und installiert werden kann. Besonders vorteilhaft ist hierbei, dass eine Veränderung an der Auslegung des Dämpfungssystems 3 keine erneute Homologation des Überrollschutzsystems 4 erfordert, wodurch Zeit und Kosten gespart werden können.

Die Dimensionierung der Verbindungsvorrichtung 6, 22, 32 und der Haltevorrichtung 7, 21, 33 ist auf das Dämpfungssystem 3 in der abgestimmt, dass erst mit dem Überschreiten einer definierten, maximalen Auslenkung der Kabine 30 eine Begrenzung der Bewegung durch eine spielfreie Ausrichtung der der Verbindungsvorrichtung 6, 22, 32 und der Haltevorrichtung 7, 21, 33 zueinander erfolgt.

**Bezugszeichenliste**

| | | | |
|---|---|---|---|
| 1 | Kabinenlagerung | 31 | Befestigungselement |
| 2 | Unteres Rahmenteil | 32 | Öse |
| 3 | Dämpfungssystem | 33 | Verbindungsvorrichtung |
| 4 | Überrollschutzsystem | 34 | Haltevorrichtung |
| 5 | Chassis | 35 | Flexibles Element |
| 6 | Verbindungsvorrichtung | | |
| 7 | Haltevorrichtung | | |
| 8 | Feder-Dämpfer-Element | | |
| 9 | Dämpfungselement | | |
| 10 | Dämpfungselement | | |
| 11 | Oberes Verbindungselement | | |
| 12 | Unteres Verbindungselement | | |
| 13 | Adapterplatte | | |
| 14 | Befestigungsmittel | | |
| 15 | Strebe | | |
| 16 | Endabschnitt | | |
| 17 | Endabschnitt | | |
| 18 | Segment | | |
| 19 | Öffnung | | |
| 20 | Ummantelung | | |
| 21 | Haltevorrichtung | | |
| 22 | Verbindungsvorrichtung | | |
| 23 | Unteres Verbindungselement | | |
| 24 | Oberes Verbindungselement | | |
| 25 | Adapterplatte | | |
| 26 | Bügelförmiger Abschnitt | | |
| 27 | Strebe | | |
| 28 | Endabschnitt | | |
| 29 | Endabschnitt | | |
| 30 | Kabine | | |

## Patentansprüche

1. Kabine (30) für eine landwirtschaftliche Arbeitsmaschine, umfassend einen unteren Rahmenteil (2), welcher durch eine ein Dämpfungssystem (3) umfassende Kabinenlagerung (1) sowie ein Überrollschutzsystem (4) mit einem Chassis (5) der Arbeitsmaschine verbunden ist, **dadurch gekennzeichnet, dass** das Überrollschutzsystem (4) eine kabinenseitig angeordnete Verbindungsvorrichtung (6, 22, 34) aufweist, wobei die Verbindungsvorrichtung (6, 22, 33) in einem ersten Betriebszustand, in welchem die Kabine (30) betriebsbedingten Belastungen ausgesetzt ist, die durch das Dämpfungssystem (3) kompensierbar sind, spielbehaftet und insbesondere formschlüssig in eine chassisseitige Haltevorrichtung (7, 21, 33) eingreift, und wobei das Überrollschutzsystem (4) parallel und separat zu dem Dämpfungssystem (3) angeordnet ist, und in einem zweiten Betriebszustand, in welchem es zu einer Aktivierung des Überrollschutzsystems (4) kommt, die auftretenden Belastungen unmittelbar über die Verbindungsvorrichtung (6, 22, 34) abgeleitet werden.

2. Kabine (30) nach Anspruch 1, **dadurch gekennzeichnet, dass** die Haltevorrichtung (7, 21, 33) einteilig mit dem Chassis (5) ausgebildet ist.

3. Kabine (30) nach Anspruch 1 oder 2, **dadurch gekennzeichnet, dass** die Haltevorrichtung (7, 21, 33) in Form eines flachen Anbauteil an dem Chassis (5) ausgebildet ist.

4. Kabine (30) nach Anspruch 1 oder 2, **dadurch gekennzeichnet, dass** die Haltevorrichtung (7, 21, 33) in Form eines Montagemoduls ausgebildet ist.

5. Kabine (30) nach einem der vorangehenden Ansprüche, **dadurch gekennzeichnet, dass** die Verbindungsvorrichtung (6, 22, 34) als ein flexibles Element (35) ausgeführt ist, welches parallel zu dem Dämpfungssystem (3) angeordnet ist.

6. Kabine (30) nach Anspruch 5, **dadurch gekennzeichnet, dass** die Verbindungsvorrichtung (34) als ein Seil, Band, Gurt oder Riemen aus einem metallischen Werkstoff ausgeführt ist.

7. Kabine (30) nach einem der vorangehenden Ansprüche, **dadurch gekennzeichnet, dass** die Verbindungsvorrichtung (6, 22) als ein starres Element ausgeführt ist.

8. Kabine (30) nach Anspruch 7, **dadurch gekennzeichnet, dass** die Verbindungsvorrichtung (6, 22) als eine Strebe (15, 27) ausgeführt ist, die mit einem Endabschnitt (16, 28) mit der Haltevorrichtung (7, 21) in Eingriff steht und mit ihrem anderen Endabschnitt (17, 29) an der Kabine (30) lösbar befestigt ist.

9. Kabine (30) nach Anspruch 8, **dadurch gekennzeichnet, dass** die Haltevorrichtung (7, 21) eine sich in vertikaler Richtung erstreckende Öffnung (19) oder Ausnehmung aufweist, in welche der mit der Haltevorrichtung (7, 21) in Eingriff stehende Endabschnitt (16, 28) der Strebe (15, 27) abschnittsweise hineinragt.

10. Kabine (30) nach Anspruch 8, **dadurch gekennzeichnet, dass** die Haltevorrichtung (21) mit einem bügelförmigen Abschnitt (26) ausgeführt ist, der sich im Wesentlichen parallel zu der Strebe (27) erstreckt und in den der Endabschnitt (28) der Strebe (27) abschnittsweise hineinragt.

11. Landwirtschaftliche Arbeitsmaschine mit einer Kabine (30), umfassend einen unteren Rahmenteil (2), welcher durch eine ein Dämpfungssystem (3) umfassende Kabinenlagerung (1) sowie ein Überrollschutzsystem (4) mit einem Chassis (5) der Arbeitsmaschine verbunden ist, **dadurch gekennzeichnet, dass** die Kabine (30) nach einem der Ansprüche 1 bis 10 ausgeführt ist.
